# EUROPEAN PATENT SPECIFICATION

(11) **EP 4 670 154 B1**
(45) Date of publication and mention of the grant of the patent: **02.09.2026**
(21) Application number: 24714677.2
(22) Date of filing: 22.02.2024
(51) Int. Cl.: G10L 15/26, G06F 40/56, G09B 19/04, G10L 15/065, G10L 15/183, G06F 40/216, G06F 40/30, G06F 40/44

(54) **METHODS FOR A PERSONALIZED APHASIA COMMUNICATION ASSISTANT SYSTEM**
VERFAHREN FÜR EIN PERSONALISIERTES ASSISTENTSYSTEM FÜR APHASISCHE KOMMUNIKATION
PROCÉDÉS POUR UN SYSTÈME D'ASSISTANT PERSONNALISÉ DE COMMUNICATION POUR L'APHASIE

(30) Priority: 22.02.2023 US 202363447514 P
(43) Date of publication of application: 31.12.2025
(73) Proprietor: University Of South Florida, Tampa, FL 33612-9220 (US)
(72) Inventor: YILMAZ, Yasin, Tampa, Florida 33612-9220 (US); KIM, Hana, Tampa, Florida 33612-9220 (US); BURGIN, William Scott, Tampa, Florida 33612-9220 (US); QUAH, Kung-Khoon, Tampa, Florida 33612-9220 (US)
(74) Representative: J A Kemp LLP
(86) International application number: PCT/US2024/016961
(87) International publication number: WO 2024/178262

(56) References cited:
- CN-A- 114 386 399
- CN-A- 114 999 468
- US-A1- 2020 219 489
- US-A1- 2021 224 474

## Description

### CROSS-REFERENCE TO RELATED APPLICATION(S)

This application is based on, claims priority to, and incorporates herein by reference in their entirety US Provisional Application Serial No. 63/447,514, filed February 22, 2023.

### BACKGROUND

### 1. Technical Field

Various embodiments and implementations described herein relate generally to communication assistance systems and methods. More specifically, embodiments and implementations hereof may relate to real-time, adaptive, and/or artificial intelligence-based systems and methods for aphasia communication assistance to allow persons with aphasia to compose and produce accurate, naturalistic language that recognizes and corrects an aphasia speaker's actual vocabulary and grammar to align with an aphasia speaker's intended speech.

### 2. Brief Description of the Prior Art

Stroke is the leading cause of global disability, with an annual approximate of 795,000 Americans living with long-terms effects of stroke. Approximately one-third of such individuals suffer from aphasia, which negatively impacts communication for those individuals. Persons with aphasia (PWA) may have altered articulation, enunciation, pronunciation, cadence/rate, or accent; may experience stutter or other vocal disorders; and may produce fragmented and structurally impaired sentences that include inaccurate words, unnecessarily-repeated words, missing words and/or jargon. Many PWA report being able to retrieve terms correctly in their head, but often produce different words through their speech. Furthermore, these symptoms persist even with a PWA writes - an attempt by a PWA to write down their intended statements does not help them alleviate many of these problems. And, these problems may even persist when a PWA is simply asked to repeat a statement.

The internal conflict arising from a PWA's cognitive ability to generate the correct/intended statement in their mind, but inability to communicate it, leads to impaired communication, anxiety, and social isolation associated with poor quality of life.

Current assistive approaches include speech therapy and social skills training. However, such therapy and training are time consuming and the utility thereof is limited by a paucity of user-adjustable features needed to satisfy individual needs. Artificial intelligence (AI) trained on cognitively healthy and post-stroke data sets can accurately transcribe spoken words in aggregate. However, a practical implementation of AI-informed or AI-based adaptive learning as applied to an individual has not been achieved in stroke-induced PWA.

In the prior art, it is known from the patent application US2020/219489A1 techniques for identifying a communication error in one or more selected portions of a communication of a user and automatically translating the communication errors in the one or more selected portions of the communication. The communication error may be corrected using a machine learning model.

It is known from the patent application CN114999468A1 techniques for speech recognition applicable to aphasisa patients.

It is known from the patent application CN114386399A1 techniques for correcting error s in speech recognition using a trained error correction model.

It is known from the patent application US2021/224474A1 techniques for generating grammatically correct sets of words using a neural network including a generator, reconstructor and discriminator.

Accordingly, what is needed is a real-time, adaptive, artificial intelligence-based end-to-end system for personalized aphasia communication assistance. However, in view of the art considered as a whole at the time the present invention was made, it was not obvious to those of ordinary skill in the field of this invention how the shortcomings of the prior art could be overcome.

While certain aspects of conventional technologies have been discussed to facilitate disclosure of the invention, Applicant in no way disclaims these technical aspects, and it is contemplated that the claimed invention may encompass one or more of the conventional technical aspects discussed herein.

In this specification, where a document, act or item of knowledge is referred to or discussed, this reference or discussion is not an admission that the document, act or item of knowledge or any combination thereof was at the priority date, publicly available, known to the public, part of common general knowledge, or otherwise constitutes prior art under the applicable statutory provisions; or is known to be relevant to an attempt to solve any problem with which this specification is concerned.

### SUMMARY

The following presents a simplified summary of one or more aspects of the present disclosure, to provide a basic understanding of such aspects. This summary is not an extensive overview of all contemplated features of the disclosure and is intended neither to identify key or critical elements of all aspects of the disclosure nor to delineate the scope of any or all aspects of the disclosure. Its sole purpose is to present some concepts of one or more aspects of the disclosure in a simplified form as a prelude to the more detailed description that is presented later.

In some respects, the invention provides a method for improving communication involving a person with aphasia according to claim 1.

In other aspects, the invention provides a method of training a personalized aphasia communication assistant model according to claim 11.

These and other aspects of the disclosure will become more fully understood upon a review of the drawings and the detailed description, which follows. Other aspects, features, and embodiments of the present disclosure will become apparent to those skilled in the art, upon reviewing the following description of specific, example embodiments of the present disclosure in conjunction with the accompanying figures. While features of the present disclosure may be discussed relative to certain embodiments and figures below, all embodiments of the present disclosure can include one or more of the advantageous features discussed herein. In other words, while one or more embodiments may be discussed as having certain advantageous features, one or more of such features may also be used in accordance with the various embodiments of the disclosure discussed herein. Similarly, while example embodiments may be discussed below as devices, systems, or methods embodiments it should be understood that such example embodiments can be implemented in various devices, systems, and methods.

### BRIEF DESCRIPTION OF THE DRAWINGS

For a fuller understanding of the invention, reference should be made to the following detailed description, taken in connection with the accompanying drawings, in which:
FIG. 1 is a process flow diagram summarizing an example implementation of a communication assistant.
FIG. 2 is a process flow diagram of an example approach to training and personalizing a communication assistance system.
FIG. 3 is a block diagram illustrating examples of data flow among users and hardware according to various configurations described herein.
FIG. 4 is a conceptual block diagram illustrating interaction (including input/output connections) of various modules, data, user interface, and related actions, in accordance with embodiments herein.
FIG. 5 is a process flow diagram of a personalized aphasia translation assistant of a personalized end-to-end communication assistance, in accordance with an embodiment of the present invention.
FIG. 6 is a generalized diagram of an example user interface of a personalized aphasia translation assistant, in accordance with embodiments herein.

### DETAILED DESCRIPTION

The detailed description set forth below in connection with the appended drawings is intended as a description of various configurations and is not intended to represent the only configurations in which the subject matter described herein may be practiced. The detailed description includes specific details to provide a thorough understanding of various embodiments of the present disclosure. However, it will be apparent to those skilled in the art that the various features, concepts and embodiments described herein may be implemented and practiced without these specific details. In some instances, well-known structures and components are shown in block diagram form to avoid obscuring such concepts. Various embodiments of the present disclosure can also be found in the attached appendices.

As used in this specification and the appended claims, the singular forms "a," "an," and "the" include plural referents unless the content clearly dictates otherwise. As used in this specification and the appended claims, the term "or" is generally employed in its sense including "and/or" unless the context clearly dictates otherwise.

As used herein, "patient" or "subject" are used to describe a human experiencing difficulty with verbal communication, such as a human suffering from the effects of aphasia or other communicative disorder or disability (including, but not limited to, stuttering, tics, cerebral palsy, physical head/neck/dental conditions, mechanical head/neck/dental conditions, and other central/peripheral neurological disorders, such as neuromuscular disease and multiple sclerosis), or a human learning or adapting to a different language, dialect, or accent.

As described above, a need exists for an adaptive/adaptable system that can both understand what a subject actually said and accurately translate the actual speech into a predicted translation of what the subject meant to say.

The present invention includes a personalized end-to-end communication assistant including a personalized translation assistant (such as a personalized aphasia translation assistant), a personalized generative assistant (such as a personalized aphasia generative assistant), and a personalized speaking assistant (such as a personalized aphasia speaking assistant). The personalized end-to-end communication assistant receives captured spoken words from a subject, translates the captured spoken words and generates contextually accurate conversation components from the translation, and outputs an audio of the conversation component in a voice and a tone of the subject. Embodiments of the personalized end-to-end communication assistant will be discussed herein below.

### Methods and Techniques

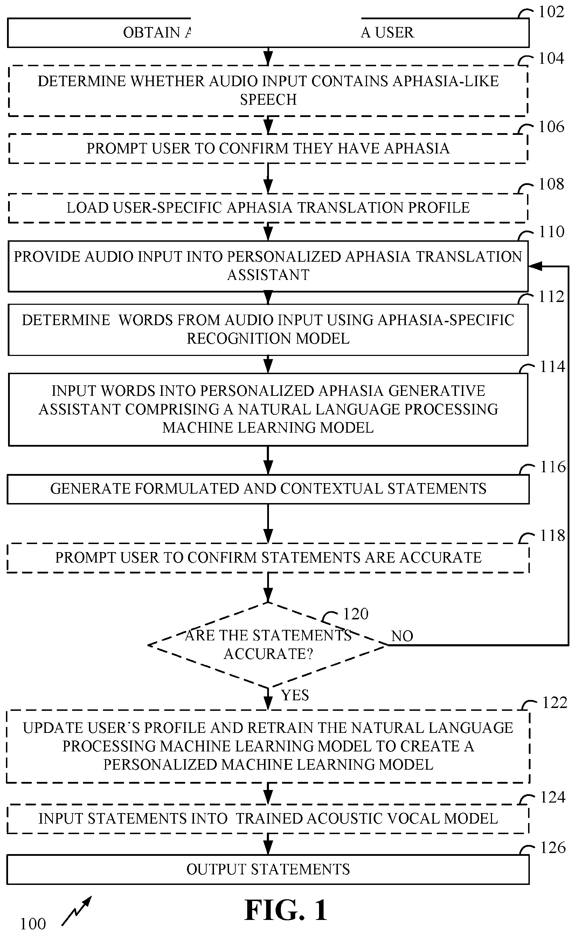

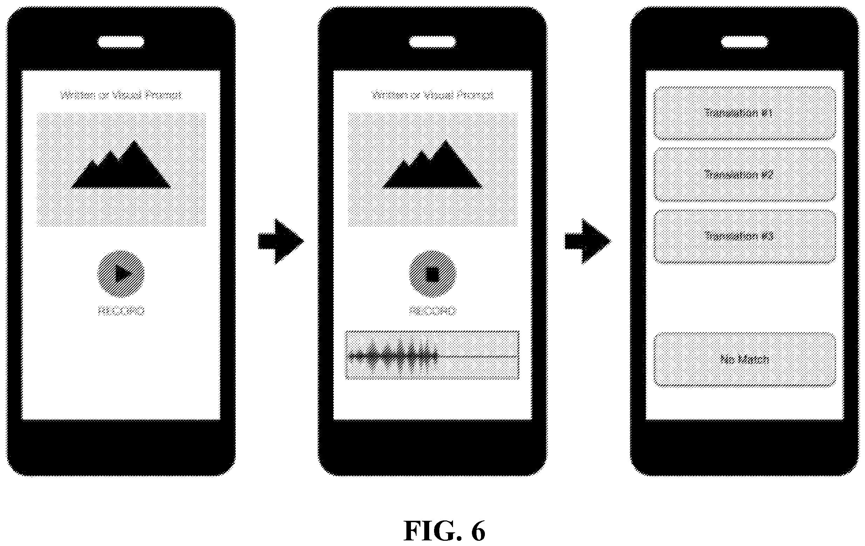

FIG. 1 is a process flow diagram summarizing an example implementation of a communication assistant in accordance with this disclosure. In some examples, the communication assistant may include a user interface, such as an application on a device (e.g., FIG. 6). The user interface may present options for the user to record their voice, playback audio, review predicted translations, and/or track their ongoing speech progression. At step 102, process 100 obtains an audio input from a user, indicative of the user speaking. In some examples, the input may be captured using a cellular device, mobile device, personal computer, telephone, videoconference device, or other similar communication device. The user may speak, using their own voice, accent, grammar and vocabulary, into a microphone of the device while using an application specific to process 100, to use as the input. Alternatively, process 100 may run unobtrusively in the background using an ambient microphone, using a device to automatically capture audio to use as an input. In other examples, the device may be a distant end of a call from the user, such as where a call center may employ process 100 to provide customer service representatives with the output of the communication assistant. The audio input itself may be a digital representation of full audio detected by a microphone, or may be filtered in a variety of ways. For example, the audio may be filtered for noise cancellation or elimination, may be filtered or transposed to a specific frequency band (e.g., to correspond more closely to training audio), may be filtered to enhance voice sounds, and/or may be intelligently filtered to include only recognized words. In some embodiments, the audio input may be a real time or near real time stream of audio detected by a device comprising a microphone; whereas in other embodiments, the audio may be a previously recorded audio clip or video.

At step 104, process 100 optionally determines whether the audio input contains aphasia-like speech. Aphasia-like speech may be characterized by various patterns in word choice, and/or various vocal patterns or disorders. For example, a PWA may exhibit difficulty pronouncing words, stuttering, unusual pauses, and/or a speech pattern including repeated words, use of incorrect words, missing words, incorrect or unusual grammar, jargon, nonsense phrases, etc. For example, process 100 may perform speech recognition and then analyze the output for rates of potentially missing words, incorrect grammar, etc., using known text analysis tools and/or for rate of uncertainty in predicting a given word. In other embodiments, a machine learning model may be trained to identify speech or vocal patterns common to aphasia speakers.

At step 106, process 100 optionally prompts a user to confirm if they have aphasia and/or whether the user would like to initiate aphasia-speech assistance. In some examples, the prompt may appear on a screen of user device, such as a cell phone screen, a television screen, a tablet screen, a computer screen, etc., may be an audible prompt, or may be a spoken prompt by an operator. The prompt may be triggered by a determination that the user's speech exceeds a given threshold likelihood that the user has aphasia.

At step 108, process 100 optionally loads a user-specific or situation-specific aphasia translation profile. In some examples, the user-specific aphasia translation profile includes one or more unique specific speech patterns displayed by an individual. In other embodiments, an aphasia-specific translation profile may be loaded. For example, various types of aphasia may be more strongly associated with changes in accent, stuttering, word choice, wrong words, etc. Additionally, the aphasia profile may be specific to whether the user is speaking audibly or typing/writing. Thus, in some implementations, when a user operates process 100 via a known/personal device, a user-specific profile may be utilized or a profile specific to the type of aphasia that the user has may be utilized based on stored settings. In other implementations, a user may log in to a stored profile that was personalized to their speech. In yet further implementations, a business (e.g., call center or chat operation) may associated a profile (subject to consent) with a user's phone number, IP address, voice, appearance, or similar identifier.

At step 110, process 100 provides the audio input into an aphasia translation assistant. The audio input from a user may comprise speech having characteristics of aphasia, and thus may not be easily understood by other individuals without modification. Thus, the aphasia translation assistant may be used to recognize, contextualize, and/or correct the actual speech represented in the audio input received from the user. The aphasia translation assistant may be personalized to the nuances of the user's individual speech patterns. For example, the translation assistant may have been trained on the user's own speech or may have been trained on speech of other individuals having similar aphasia symptoms or criteria such as by cause of aphasia (e.g., stroke-caused aphasia, traumatic brain injury, traumatic injury to specific lobes of the brain, brain tumors, etc.) or by symptomatic type of aphasia (e.g.,. Broca's aphasia, Wernicke's aphasia, anomic aphasia, etc.).

At step 112, process 100 determines a plurality of words from the audio input using an aphasia-specific recognition model. In some examples, the aphasia-specific recognition model may comprise a speech to text module that has been modified to more readily recognize speech of a PWA. For example, a speech to text module may be based upon a normal English speech recognition model, but modified to optimize predictions/recognitions of words spoken by aphasia speakers. For example, for some types of aphasia an optimization may be to de-weight grammar or sentence context (e.g., nearby words or sequences of words) as predictors of a given word, relative to weighting based on sounds or phonemes. In another example, an optimization may de-weight context as a predictor of a given word only as to certain commonly skipped words such as articles, possessives, proper nouns or other parts of speech, or as to repeated words. In other examples, an optimization may be to reduce or eliminate the use of pauses in speech as indicators of a finished statement, so that context-based predictors may not misjudge a word due to a pause in a PWA's speech being interpreted as the end of a statement. Various methods of making such optimizations are further described below.

At step 114, process 100 inputs the plurality of words into an aphasia generative assistant, which may comprise a large language model or natural language processing machine learning model. The aphasia generative assistant is configured to translate words actually spoken by a PWA into normalized statements in a given language (e.g., English) that are accurate in word choice and grammar. A generative assistant of process 100 can thus be thought of, in some respects as being akin to a language translator, but instead of translating from one language (e.g., French) to another (e.g., English) the generative assistant translates actual aphasia speech of a given language (e.g., English) into corrected speech of the same language (e.g., English). It should be recognized that in some implementations in which process 100 is operating on text that was typed by a PWA (rather than spoken as audio), then step 112 may be skipped and the plurality of words provided to the aphasia generative assistant may instead by the actual typed text from the PWA.

At step 116, process 100 generates one or more formulated, corrected, and/or contextual statements to correspond to the audio input. The aphasia generative assistant may analyze the plurality of words to generate statements that are relevant to a conversation. Thus, in some embodiments, the context of a conversation in its entirely may help improve predictive accuracy of the corrected/corresponding speech. For example, the longer a PWA speaks in a given session, the more context the generative assistant may have to predict what the PWA actually meant to say for a given word or series of words. In other embodiments, when a PWA is speaking to an individual that speaks in regular English, the statements and questions spoken by the other individual can be relied upon as context for generating a corrected/corresponding response of the PWA. Thus, in such embodiments the audio input may comprise speech of more than one speaker, and/or more than one audio input may be utilized (e.g., one audio input being provided to a normal/generalized text to speech engine and one audio input being provided to the aphasia-specific recognition engine of step 112, then the resulting text of both engines being provided to the generative assistant.

At step 118, process 100 optionally prompts the user to confirm that the one or more statements are accurate. In some examples, the output text of the generative assistant prompt may appear on a screen of user device, such as a cell phone screen, a television screen, a tablet screen, a computer screen, etc., along with a request for the user to confirm this is what they "meant" to say.

At step 120, process 100 may optionally perform various actions depending on whether the user indicated the statements are accurate. If the user indicated that the statements are not accurate, the process 100 returns to step 110 so that it can provide a new prediction of the corrected/corresponding text to what the PWA had actually spoken. Alternatively, if the user indicated that the statements are not accurate, then process 100 may simply output the next most likely statement that was determined by the generative assistant, rather than generating an alternative text recognition. Then if the next most likely statement (or statements, if more than one additional prediction is provided) is still not accurate, alternatives of the text recognition engine can be recalled and provided to the generative assistant. In this manner, the process 100 can determine if the source of error was improper translation or improper recognition so that the appropriate model/engine can be retrained accordingly. This can be important for some types of aphasia, in which the PWA may not be able to easily recognize that they spoke unintended words.

If the user indicated that the statements are accurate, the process 100 may simply continue to step 122.

At step 122, process 100 optionally updates the user's profile based on the confirmed correct pairing of input audio and output of the generative assistant. This may include retraining the natural language processing machine learning model of the generative assistant to adapt more closely to predicting the speech a PWA "meant" to say when he or she spoke a given statement. Thus, process 100 can create a recursive, increasingly-tailored personalized machine learning model to be utilized for that specific user The updates made the user's profile may alternatively include an increment/increase to weighting of identified speech patterns or other characteristics as likely corresponding to a given corrected output associated with the received input. Similarly, a recursive, updating may be performed with respect to the
At step 124, process 100 optionally inputs the one or more statements into a trained acoustic vocal model. The trained acoustic vocal model may generate audio of the one or more statements in the acoustics of user's unique voice.

Finally, at step 126, process 100 outputs the one or more statements. The one or more statements may be outputted on a speaker of a cellular device or computer using the trained acoustic vocal model. For example, the audio associated with the one or more statements may be sent over a cellular network during a phone call. The recipient on the other end of the phone call may only hear the one or more statement, rather than the initial audio input. Alternatively, the statements may be output as text (e.g., when the PWA is using voice commends to generate a message, or when the PWA is typing text).

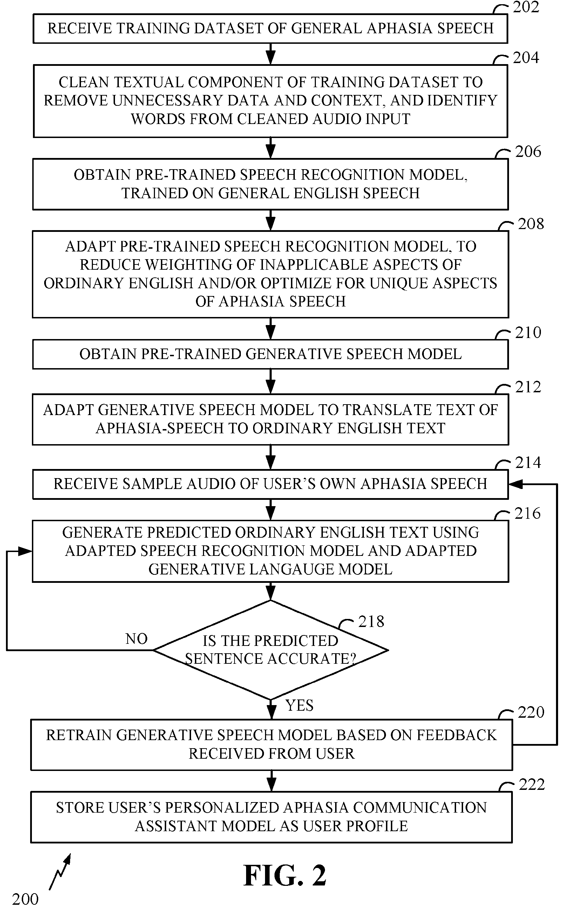

FIG. 2 is a process flow diagram of an example process 200 for training and personalizing a communication assistance system. In some examples, process 200 may be used to train and personalize the recognition model and the natural language processing machine learning model used in process 100.

At step 202, process 200 receives a training dataset of general uncorrected speech. The general uncorrected speech may contain speech samples obtained from one or more individuals with a speech or vocal disorder, such as aphasia, in the form of audio and/or text. In some examples, the training dataset may include aphasia speech specific to stroke patients. In other examples, the training dataset may come from individuals having other specific types of aphasia, other types of speech disorders, or specific causes of aphasia, such as a head-injury, etc. The uncorrected speech samples may be characterized by a speech or vocal disorder and/or speech patterns including slurring, repeated words, stuttering, unusual pauses, missing words, wrong words, etc. In other examples, the dataset may comprise pairs of audio and corresponding text. Specifically, the inputs may be audio recordings of the uncorrected speech plus exact (uncorrected) translations, which may provide keywords for sentence generation. In other examples, the dataset may comprise prompts (e.g., visual or textual prompts) as well as audio or text of what an individual spoke in response.

At step 204, process 200 processes the textual component of the training dataset to remove unnecessary information, as well as data that may negatively impact training. This step may include more than simple formatting, removal of erroneous data, or other common pre-processing steps: step 204 may instead rely on characteristics or idiosyncrasies of aphasia speech that have been ascertained to be commonly represented in text recognitions, the removal of which improve the ability of a generative assistant to accurately predict what a PWA "meant" to say. For example, textual indications of context or sounds (e.g., "[laughs]" or "[sighs]") would be removed from the text component of the training dataset, and in some embodiments associated audio may be removed as well (e.g., by timestamp). The unnecessary data and context may alternatively be removed in the form of recognizing words or sounds that are characteristics of the aphasia speech, but which may not be helpful to training of the speech recognition model or generative assistant. For example, repeated words or syllables, detected in an audio sample of an individual stuttering, may be removed. In some examples, incorporating artificial delays into an audio sample (e.g., a 200ms delay at the end of each time stamp, a delay at the end of each sentence, etc.) may be useful for training purposes. In some embodiments, wherever an utterance is indicated as simply a phoneme or string of phonemes in a text transcription (e.g., short strings of characters with the symbol '@'), the phoneme or string can be removed along with associated audio. Likewise, common non-word utterances or interjections (e.g., "uh", "um", "ah") can be removed. However, in some cases where phonemes are repeated as a result of a stutter or other aphasia-specific characteristic, the phonemes can be removed from the text but the corresponding audio can be left to keep the sound of those utterances. Similarly, any individual symbols or words having symbols that do not associate directly to a well known spoken word can also be removed, such as "[:", "[+", "gram]", "@", "&=", ":", "[*", "+...", "[//]", "+..?", "+/.", "+/?", "+//", "+//?", "&+", "[/", "<+", "+<", "/.", or "[=","exc]". Similarly, signifiers of format can also be removed, such as paragraph indicators, bullet points, etc.

At a deeper level, corrections and deletions can be made to improve the textual component of the training dataset. For example, transcribed "words" that can be ascertained by phonetic reconstruction or identified as simple misspellings can be replaced with the correct term. Proper nouns can be removed. And, strings of clearly redundant/repetitive words can also be removed as indicative of error in transcription (e.g., more than 3-4 instances of the same word in a row). However, any words that appear to be clearly incorrect must be preserved as in this instance process 200 will benefit from retaining instances of a speaker having spoken the wrong word. Thus, while counterintuitive to a typical data cleaning process, step 204 may seek to retain misspoken words or verbal utterances that do not have a translation.

At step 206, process 200 obtains a pre-trained speech recognition model that has been trained on general English speech. The pre-trained speech recognition model may be trained using speech that does not exhibit aphasia-like speech patterns. For example, the general English speech may include grammatically and contextually accurate sentences and/or phrases.

At step 208, process 200 adapts the pre-trained speech recognition model to reduce weightings associated with inapplicable aspects of ordinary English and/or optimizes the model to account for unique aspects of aphasia speech. For example, the weight associated with grammar or common word sequences/sentence structures may be reduced, therefore, grammar or common word sequences/sentence structures may not be used as a primary predictor of recognizing speech or may have a lesser impact on output predictions. This may be accomplished in a variety of ways. In some embodiments, a pre-trained general speech recognition model may be further trained or retrained on a dataset that includes both ordinary English speech and text as well as aphasia speech and text, such that sentence and grammatical context are not as useful predictors of what a given spoken word should be predicted to be. In other embodiments, this may be accomplished by altering or pruning weights or layers of a neural network, or modifying input channels of a neural network to simply eliminate sentence context as a feature or to limit how or when sentence context can be taken into account as a feature. In other embodiments, specific words that are identified in an aphasia training dataset as exhibiting stutter or other vocal disorder can be substituted in place of words in, or spliced into, normal English sentences of an ordinary English training dataset, to further increase presentation of incorrect words within otherwise normal sentences within the training set. In this regard, a system may be implemented in which a pre-trained model need not be modified. Rather, a speech recognition model may be created through use of only aphasia-like training data such as ordinary English training data that has been modified in specific ways to exhibit patterns known to be common to aphasia speech. A system may thus be used to modify an ordinary English training data set to substitute audio and corresponding text of a wrong word in place of the original word, to delete words, to inject random pauses within sentences, and the like, according to settings of a user such as a speech therapist. The settings can be specific to a given category of speech disorder, or to the idiosyncratic characteristics of a given patient's aphasia speech.

At step 210, process 200 obtains a pre-trained generative speech model. The pre-trained generative speech model may comprise a large language model, a natural language processing machine learning model, or the like. In some embodiments, the pre-trained generative speech model may be an existing model that is known to be capable of translating words, phrases, and sentences of one language into another language.

At step 212, process 200 adapts the generative speech model to translate text of the aphasia-speech to ordinary English text. The text of the aphasia-speech may correspond to the cleaned text associated with the dataset of general aphasia speech. The adaptation of the generative model may be accomplished using training techniques specific to the model itself. For example, in one embodiment, AutoTrain was used to finetune a large language model (Llama 2) on a dataset which included input/output pairs. The inputs were translations from an aphasia-specific speech recognition engine (e.g., a modification of the Whisper text to speech engine), which served to provide the keywords for the sentence completion task that the LLM would perform. The outputs of the training data were full sentence descriptions of visual prompts (e.g., pictures shown to aphasia patients in the AphasiaBank dataset). The full sentence descriptions were validated using domain expertise of speech and/or communication therapists.

In addition to, or as an alterative to, the training data provided to the generative model, various prompts may be provided to the LLM for finetuning. In some examples, the prompts identify specific attributes of the speech disorder that is exhibited in the training data, and for which the LLM would serve to translate into corrected/ordinary English (or other language of interest). For example, if the training data reflects speech of individuals experiencing aphasia after a specific type of brain trauma, the prompts to the LLM may identify known symptoms or aspects of symptoms common to that type of aphasia as well as how to interpret, interpolate, and correct for those symptoms. In some embodiments, the prompts may also circumscribe the scope of corrections that can be made. For example, prompts may be used to prevent the LLM from changing meaning, referencing the speaker, or accounting for another person in a conversation. Prompts may also be used to focus changes on specific patterns, such as eliminating repeated words, consolidating repeated sentences or parts of sentences (e.g., wherein an aphasia speaker repeats a sentence or phrase to adjust a word), or how to process unintelligible words (e.g., represented by phonemes) so they are replaced and not merely re-presented in altered phoneme format. In other embodiments, the model can be modified to take into account context of another, non-PWA speaker's words, but avoid including them when translating the PWA's speech.

At step 214, process 200 receives sample audio of a user's own aphasia speech. In some examples, the process 200 may use the audio sample to train an acoustic vocal model, which may generate audio in the acoustics of the user's unique voice but using the output of the generative model in place of the words actually spoken. In other examples, the process may identify and save the user's specific aphasia speech pattern.

At step 216, process 200 generates predicted ordinary English text using the adapted speech recognition model and the adapted generative language model. In some examples, the process 200 may act as a translator which transforms the inputted aphasia speech to output grammatically and contextually accurate sentences. The predicted ordinary English text may substitute incorrect words for intended words and/or fill in the sentences with words that were missing in the aphasia speech.

At step 218, process 200 determines if the predicted sentence associated with the predicted ordinary English text is accurate, such as by asking the user to confirm accuracy or make corrections. If the sentence is not accurate, the process 200 returns to step 216. There may be feedback associated the determination that the sentence is not accurate. If the sentence is accurate, the process 200 continues to step 220.

At step 220, process 200 retrains the generative speech model based on the feedback received from the user. For example, the feedback obtained at step 218 may include an identification of what words are incorrect and/or an indication of the context being incorrect.

Finally, at step 222, the process 200 stores the user's personalized aphasia communication assistant model as a user profile. In some examples, the user's personalized aphasia communication assistant model may be associated with the user-specific aphasia translation profile used in step 108 of process 100.

In other examples, the user's personalized aphasia communication assistant model may be further trained by prompting a user to say a specific sentence out loud. The audio from the user may then be saved and the model may be retained using the vocalization of the prompted sentence. In other examples, the model may confirm the audio obtained from the user saying the specific sentence out loud.

### Example Hardware System

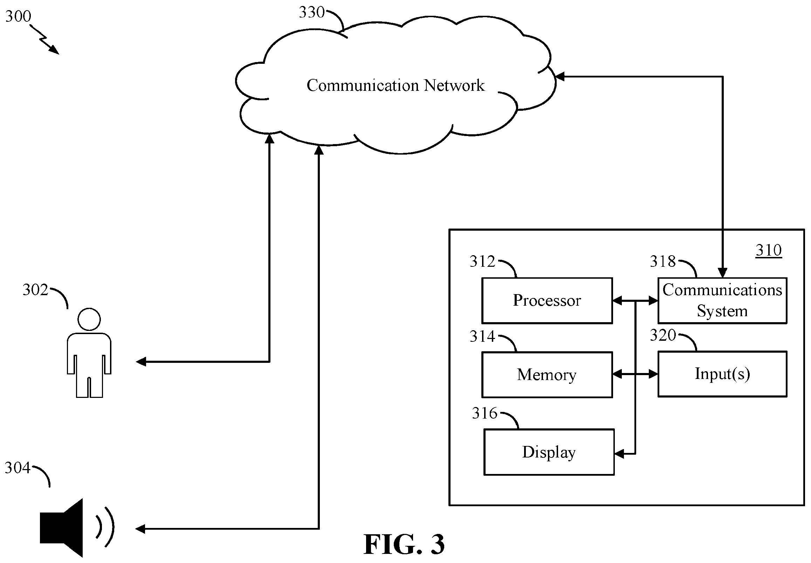

FIG. 3 shows a block diagram illustrating a system for a personalized aphasia communication assistant system, according to some embodiments. As shown in FIG. 3, computing device 310 can receive an input from a user (e.g., from a patient user 302, a recording, a dataset, a speaker, or any other suitable data source 304), provide the input to a personalized aphasia translation assistant, determine words from the input, input the words into a generative assistant, generate one or more formulated and contextual sentences, and output the sentences.

In some examples, computing device 310 can include processor 312. In some embodiments, the processor 312 can be any suitable hardware processor or combination of processors, such as a central processing unit (CPU), a graphics processing unit (GPU), an application specific integrated circuit (ASIC), a field-programmable gate array (FPGA), a digital signal processor (DSP), a microcontroller (MCU), etc. Processor 312 may be located within a local (to the user) device (such as a mobile device), may be associated with a system hosting a patient medical record application, may be associated with a system providing information to physicians, may be part of a cloud-based resource, or otherwise, depending on the particular embodiment.

In further examples, computing device 310 can further include a memory 314. The memory 314 can include any suitable storage device or devices that can be used to store suitable data and instructions that can be used, for example, by the processor 312 to receive a first plurality of entries corresponding to a plurality donor factor and a second plurality of entries corresponding to a plurality of recipient factors. In some examples, a secure database may be used. The memory 314 can include any suitable volatile memory, non-volatile memory, storage, or any suitable combination thereof. For example, memory 314 can include random access memory (RAM), read-only memory (ROM), electronically-erasable programmable read-only memory (EEPROM), one or more flash drives, one or more hard disks, one or more solid state drives, one or more optical drives, cloud-based resources, etc. In some embodiments, the processor 312 can execute at least a portion of processes 100 and/or 200, described above in connection with FIG. 1 or 2.

In further examples, computing device 310 can further include communications system 318. Communications system 318 can include any suitable hardware, firmware, and/or software for communicating information over communication network 340 and/or any other suitable communication networks. For example, communications system 318 can include one or more transceivers, one or more communication chips and/or chip sets, etc. In a more particular example, communications system 318 can include hardware, firmware and/or software that can be used to establish a Wi-Fi connection, a Bluetooth connection, a cellular connection, an Ethernet connection, a local network, etc.

In further examples, computing device 310 can receive and/or transmit information (e.g., from or to a user 302, a facility, a speak, a cellphone, an audio device 304, any other suitable data source, and/or any other suitable system) over a communication network 330. In some examples, the communication network 330 can be any suitable communication network or combination of communication networks. For example, the communication network 330 can include a Wi-Fi network (which can include one or more wireless routers, one or more switches, etc.), a peer-to-peer network (e.g., a Bluetooth network), a cellular network (e.g., a 3G network, a 4G network, a 5G network, etc., complying with any suitable standard, such as CDMA, GSM, LTE, LTE Advanced, NR, etc.), a wired network, etc. In some embodiments, communication network 130 can be a local area network, a wide area network, a public network (e.g., the Internet), a private or semi-private network (e.g., a corporate or university intranet), any other suitable type of network, or any suitable combination of networks. Communications links shown in FIG. 3 can each be any suitable communications link or combination of communications links, such as wired links, fiber optic links, Wi-Fi links, Bluetooth links, cellular links, etc.

In further examples, computing device 310 can further include a display 316 and/or one or more inputs 320. In some embodiments, the display 316 can include any suitable display devices, such as a computer monitor, a touchscreen, a television, an infotainment screen, etc. to display a report about patient-specific post-surgery mortality prediction, a survival probability of the patient, or any suitable information relating to the patient-specific post-surgery mortality prediction. In further embodiments, the input(s) 320 can include any suitable input devices and/or sensors that can be used to receive user input, such as a keyboard, a mouse, a touchscreen, a microphone, etc.

### Example System Interaction

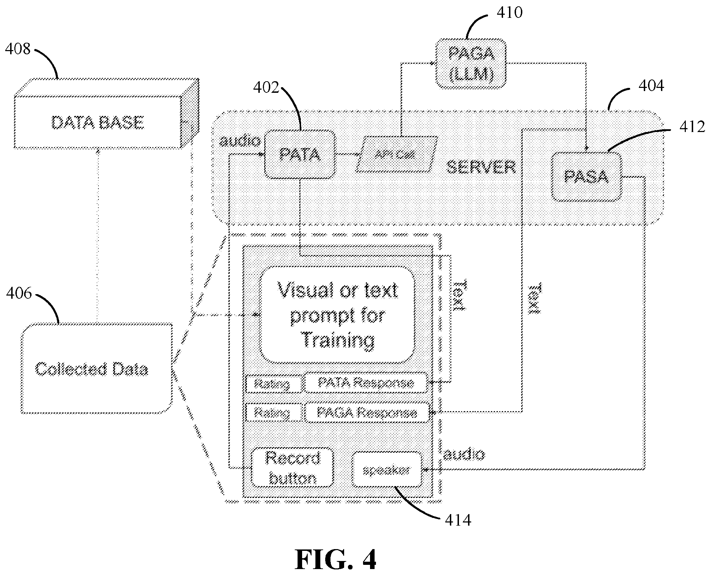

FIG. 4 is a conceptual block diagram illustrating an example interaction 400 (including input/output connections) of various modules, data, user interface, and related actions. The interaction may represent an assistant system that runs on a server. The prototype comprises a machine learning pipeline of synergistic modules facilitating seamless communication for a progressive web application (PWA).

A Personalized Aphasia Translation Assistant (PATA) module 402 in server 404 may interpret the speech of PWAs, adapting and improving its performance as it continually learns from each user, using collected data 406 obtained from or save to a data base 408. A personalized approach can ensure that the PATA module 402 becomes increasingly attuned to the nuances of an individual's speech pattern over time. Users may also opt for typed input, if desired.

Building upon the translations provided by the PATA module 402, a Personalized Aphasia Generative Assistance (PAGA) 410 module analyzes often-fragmented input and intelligently generates coherent, contextually relevant conversations. In some examples, the PAGA module may be accessed via an API call. In other examples, the PAGA module may be locally stored on a device. The PAGA module 410 ensures that PWAs can effectively express their thoughts and ideas.

A Personalized Aphasia Speaking Assistant (PASA) module 412 in server 404 vocalizes the coherent sentences generated by the PAGA module 410 in the user's unique voice. This feature allows PWAs to communicate more naturally, fostering a sense of familiarity and comfort in social interactions. The vocalization may be performed using an audio device, such as a speaker 414.

A preliminary study involved training an artificial intelligence on Turkish and Hindi (two low-resource languages), and aphasic speed using an aphasia speech dataset. Training significantly reduced word error rates - 79% for Turkish and 63% for Hindi, validating the approach. Next, the approach was tested using the aphasia speech dataset. The process encompassed three stages: data extraction, data cleaning, and model fine-tuning. The aphasia dataset was used to extract and clean relevant speed data from 28 patients. The extracted and cleaned data were split into a training set and a test set (64,051 and 16,250 samples, respectively), which were then used to fine-tune two speech recognition models. Notably, improvements were observed in word error rates for both models. The first model's word error rate (WER) improved, decreasing from 1.2 to 0.35. Similarly, the second model's WER improved from 0.6 to 0.28.

### Example Translation Assistant Training

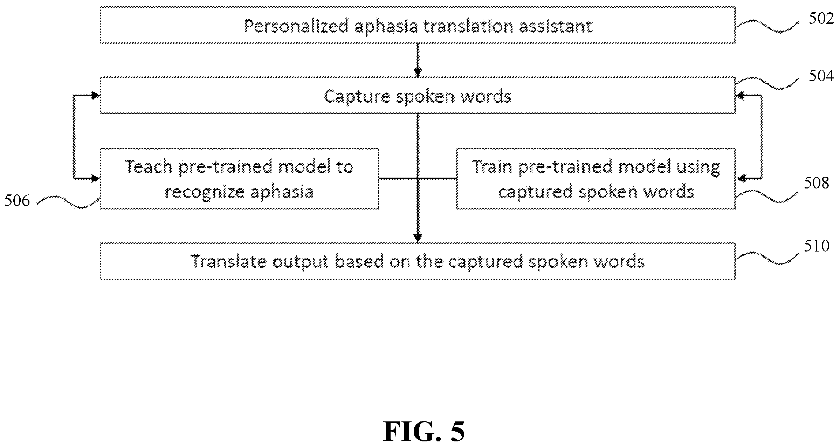

Turning to FIG. 5, a personalized aphasia translation assistant 502 accurately captures spoken words at step 504 spoken by a PWA. The captured spoken words are transmitted through a computing device including a machine learning module, such as a statistical machine translation and an artificial neural network. In an embodiment, a first phase of personalized aphasia translation assistant 502 includes the use of an existing pre-trained model (such as an open source model that is already trained in standard English speech), and the teaching of the existing pre-trained model to recognize expressive aphasia using an existing conversation stroke language dataset(s) at step 506. Upon achieving a satisfactory baseline via step 506, a second phase of personalized aphasia translation assistant 502 includes further training the model on individual PWA captured spoken words and individual-level corrections at step 508. After receiving the captured spoken words at step 504, personalized aphasia translation assistant 502 translates an output via the model based on the captured spoken words at step 510.

The effectiveness of personalized aphasia translation assistant 502 was tested using two open-source automatic speech recognition models. Despite being highly trained in standard English, the models have limited capability in other accents and/or languages and speech and/or language disorders. To recreate the predicaments of an AI recognizing the verbal expression issues of a PWA, the word-error-rate (WER) was calculated using WER= (S+D+I)/N, wherein S is the number of substitutions, D is the number of deletions, I is the number of insertions, and N is the number of words in the reference; the number of words in the reference is defined as N=S+D+C, with C representing the number of correct terms. The improvement in the WER of each model was calculated when exposed to Hindi and Turkish foreign language datasets, both before and after refinement with an extra target language data. The improvement in the WER was calculated to be 79% for Turkish language datasets and 63% for Hindi datasets. As such, it should be appreciated that while the pretraining was performed using the English language, the system and method of providing a real-time, adaptive, artificial intelligence-based, and personalized end-to-end communication assistant can be utilized for any language with sufficient training.

### Hardware and Software Infrastructure Examples

The present invention may be embodied on various computing platforms that perform actions responsive to software-based instructions and most particularly on touchscreen portable devices. The following provides an antecedent basis for the information technology that may be utilized to enable the invention.

A computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any non-transitory, tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wire-line, optical fiber cable, radio frequency, etc., or any suitable combination of the foregoing. Computer program code for carrying out operations for aspects of the present invention may be written in any combination of one or more programming languages, including an object oriented programming language such as Java, C#, C++, Visual Basic or the like and conventional procedural programming languages, such as the "C" programming language or similar programming languages.

Aspects of the present invention are described above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices (such as through an application programming interface) to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

In the foregoing specification, implementations of the disclosure have been described with reference to specific example implementations thereof. It will be evident that various modifications may be made thereto within the scope of protection defined by the following claims. The specification and drawings are, accordingly, to be regarded in an illustrative sense rather than a restrictive sense.

## Claims

1. A method for improving communication involving a person with aphasia, the method comprising:
obtaining (102) an audio input indicative of speech of the person with aphasia;
providing (110) the audio input to a personalized aphasia translation assistant, wherein the personalized aphasia translation assistant was trained to recognize and translate speech of the person with aphasia using a general dataset of aphasia-speech;
determining (112) a plurality of words from the audio input using an aphasia-specific recognition model;
inputting (114) the plurality of words into an aphasia generative model, the aphasia generative model comprising a natural language processing machine learning model trained using a general dataset of aphasia speech and a corresponding dataset of corrected speech;
generating (116) one or more formulated and contextual sentences using the aphasia generative model; and
outputting (126) the one or more formulated and contextual sentences.

2. The method of claim 1, further comprising determining whether the audio input contains speech comprising incorrect words, incomplete sentences, missing words, unusual pauses, and stuttering.

3. The method of claim 2, further comprising prompting the person to confirm they have aphasia.

4. The method of claim 3, further comprising loading a user-specific aphasia translation profile to the personalized aphasia translation assistant after the person confirms they have aphasia.

5. The method of claim 4, further comprising prompting the user to confirm the one or more formulated and contextual sentences.

6. The method of claim 5, further comprising:
updating the user-specific aphasia translation profile; and
retaining the natural language processing machine learning model to create a personalized machine learning model.

7. The method of claim 1, further comprising inputting the one or more formulated and contextual sentences into a trained acoustic vocal model.

8. The method of claim 1, wherein the aphasia-specific recognition model has been adapted to reduce a plurality of weightings associated with aspects of ordinary speech in a given language and to increase weightings associated with aspects of aphasia speech in the given language.

9. The method of claim 1, wherein the aphasia generative model is configured to translate text of aphasia speech to ordinary text of a given language.

10. The method of claim 9, wherein the aphasia generative model is further configured to predict additional ordinary text of the given language associated with translating text of aphasia speech.

11. A method of training a personalized aphasia communication assistant model, the method comprising:
receiving (202) a training dataset of general aphasia speech, wherein the training dataset of general aphasia speech comprises a plurality of actual spoken words in a given language from individuals having aphasia and a plurality of corresponding words in the given language;
modifying (204) textual components of the training dataset to remove information pertaining to non-verbal communications and utterances;
identifying a plurality of words from an audio component of the training dataset;
obtaining (206) a pre-trained speech recognition model, wherein the pre-trained speech recognition model has been trained using general speech of the given language;
adapting (208) the pre-trained speech recognition model to reduce a plurality of predictive weightings based on grammar and word context associated with the given language;
obtaining (210) a pre-trained generative speech model applicable to the given language;
adapting (212) the pre-trained generative speech model to translate text of aphasia speech to text corresponding to intended speech of the given language;
receiving (214) an audio sample, the audio sample comprising audio of a user's own aphasia speech;
generating (216) a plurality of predicted text, wherein the predicted text corresponds to intended speech of the audio sample using the adapted pre-trained generative speech model and the adapted pre-trained speech recognition model;
prompting (220) a user to confirm an accuracy of the plurality of predicted text;
retraining the adapted generative speech model and the adapted speech recognition model based on the audio sample, the plurality of predicted text, and feedback received from the user; and
storing (222) the retrained adapted generative speech model and the retrained adapted speech recognition model to a personalized aphasia communication assistant as a personalized user profile for the user.

12. The method of claim 11, wherein adapting the pre-trained generative speech model comprises optimizing the pre-trained speech recognition model for aspects of aphasia speech.

## Patentansprüche

1. Verfahren zur Verbesserung der Kommunikation mit einer Person mit Aphasie, wobei das Verfahren Folgendes umfasst:
Erhalten (102) einer Audioeingabe, die die Sprache der Person mit Aphasie wiedergibt;
Bereitstellen (110) der Audioeingabe an einen personalisierten Aphasie-Übersetzungsassistenten, wobei der personalisierte Aphasie-Übersetzungsassistent darauf trainiert wurde, die Sprache der Person mit Aphasie unter Verwendung eines allgemeinen Datensatzes von Aphasie-Sprache zu erfassen und zu übersetzen;
Bestimmen (112) einer Vielzahl von Wörtern aus der Audioeingabe unter Verwendung eines aphasiespezifischen Erkennungsmodells;
Eingeben (114) der Vielzahl von Wörtern in ein generatives Aphasie-Modell, wobei das generative Aphasie-Modell ein maschinelles Lernmodell zur Verarbeitung natürlicher Sprache umfasst, das unter Verwendung eines allgemeinen Datensatzes von Aphasie-Sprache und eines entsprechenden Datensatzes von korrigierter Sprache trainiert wurde;
Erzeugen (116) eines oder mehrerer formulierter und kontextbezogener Sätze unter Verwendung des generativen Aphasie- Modells; und
Ausgeben (126) des einen oder der mehreren formulierten und kontextbezogenen Sätze.

2. Verfahren nach Anspruch 1, das ferner das Bestimmen umfasst, ob die Audioeingabe Sprache enthält, die falsche Wörter, unvollständige Sätze, fehlende Wörter, ungewöhnliche Pausen und Stottern enthält.

3. Verfahren nach Anspruch 2, das das Auffordern der Person umfasst, zu bestätigen, dass sie an Aphasie leidet.

4. Verfahren nach Anspruch 3, das ferner das Laden eines benutzerspezifischen Aphasie-Übersetzungsprofils in den personalisierten Aphasie-Übersetzungsassistenten umfasst, nachdem die Person bestätigt hat, dass sie an Aphasie leidet.

5. Verfahren nach Anspruch 4, das ferner das Auffordern des Benutzers umfasst, den einen oder die mehreren formulierten und kontextbezogenen Sätze zu bestätigen.

6. Verfahren nach Anspruch 5, das ferner umfasst:
Aktualisieren des benutzerspezifischen Aphasie-Übersetzungsprofils; und
Beibehalten des maschinellen Lernmodells zur Verarbeitung natürlicher Sprache, um ein personalisiertes maschinelles Lernmodell zu erstellen.

7. Verfahren nach Anspruch 1, das ferner das Eingeben des einen oder der mehreren formulierten und kontextbezogenen Sätze in ein trainiertes akustisches Sprachmodell umfasst.

8. Verfahren nach Anspruch 1, wobei das aphasiespezifische Erfassungsmodell so angepasst wurde, dass eine Vielzahl von Gewichtungen, die Aspekten der normalen Sprache in einer bestimmten Sprache zugeordnet sind, reduziert werden und Gewichtungen, die Aspekten der Aphasie-Sprache in der bestimmten Sprache zugeordnet sind, erhöht werden.

9. Verfahren nach Anspruch 1, wobei das generative Aphasie-Modell so konfiguriert ist, dass es Text aus Aphasie-Sprache in normale Sprache einer bestimmten Sprache übersetzt.

10. Verfahren nach Anspruch 9, wobei das generative Aphasie-Modell ferner so konfiguriert ist, dass es zusätzlichen normalen Text der bestimmten Sprache zuordnet, der der Übersetzung von Text aus Aphasie-Sprache zugeordnet ist.

11. Verfahren zum Trainieren eines personalisierten Aphasie-Kommunikationsassistent-Modells, wobei das Verfahren umfasst:
Empfangen (202) eines Trainingsdatensatzes mit allgemeiner Aphasie-Sprache, wobei der Trainingsdatensatz mit allgemeiner Aphasie-Sprache eine Vielzahl von tatsächlich gesprochenen Wörtern in einer bestimmten Sprache von Personen mit Aphasie sowie eine Vielzahl von entsprechenden Wörtern in der bestimmten Sprache umfasst;
Modifizieren (204) von Textkomponenten des Trainingsdatensatzes, um Informationen zu entfernen, die sich auf nonverbale Kommunikation und Äußerungen beziehen;
Identifizieren einer Vielzahl von Wörtern aus einer Audiokomponente des Trainingsdatensatzes;
Erhalten (206) eines vortrainierten Spracherfassungsmodells, wobei das vortrainierte Spracherfassungsmodell unter Verwendung allgemeiner Sprache der gegebenen Sprache trainiert wurde;
Anpassen (208) des vortrainierten Spracherfassungsmodells, um eine Vielzahl von Vorhersagegewichtungen basierend auf der Grammatik und dem Wortkontext der gegebenen Sprache zu reduzieren;
Erhalten (210) eines vortrainierten generativen Sprachmodells, das auf die gegebene Sprache anwendbar ist;
Anpassen (212) des vortrainierten generativen Sprachmodells, um Text aus Aphasie-Sprache in Text zu übersetzen, der der beabsichtigten Sprache der gegebenen Sprache entspricht;
Empfangen (214) einer Audioprobe, wobei die Audioprobe Audioaufnahmen der eigenen Aphasie-Sprache eines Benutzers umfasst;
Erzeugen (216) einer Vielzahl von vorhergesagten Texten, wobei der vorhergesagte Text der beabsichtigten Sprache der Audioprobe entspricht, wozu das angepasste vortrainierte generative Sprachmodell und das angepasste vortrainierte Spracherkennungsmodell verwendet werden;
Auffordern (220) eines Benutzers, die Genauigkeit der Vielzahl der vorhergesagten Texte zu bestätigen;
Neutraining des angepassten generativen Sprachmodells und des angepassten Spracherfassungsmodells basierend auf der Audioprobe, der Vielzahl der vorhergesagten Texte und dem vom Benutzer erhaltenen Feedback; und
Speichern (222) des neu trainierten angepassten generativen Sprachmodells und des neu trainierten angepassten Spracherfassungsmodells in einem personalisierten Aphasie-Kommunikationsassistent-Modells als personalisiertes Benutzerprofil für den Benutzer.

12. Verfahren nach Anspruch 11, wobei das Anpassen des vortrainierten generativen Sprachmodells das Optimieren des vortrainierten Spracherfassungsmodells für Aspekte der Aphasie-Sprache umfasst.

## Revendications

1. Procédé destiné à améliorer la communication impliquant une personne atteinte d'aphasie, le procédé comprenant :
l'obtention (102) d'une entrée audio indicative de parole de la personne atteinte d'aphasie ;
la fourniture (110) de l'entrée audio à un assistant de traduction d'aphasie personnalisé, dans lequel l'assistant de traduction d'aphasie personnalisé a été entraîné pour reconnaître et traduire la parole de la personne atteinte d'aphasie à l'aide d'un ensemble de données général de parole d'aphasie ;
la détermination (112) d'une pluralité de mots à partir de l'entrée audio à l'aide d'un modèle de reconnaissance spécifique de l'aphasie ;
la fourniture en entrée (114) de la pluralité de mots à un modèle génératif d'aphasie, le modèle génératif d'aphasie comprenant un modèle d'apprentissage automatique de traitement de langage naturel entraîné à l'aide d'un ensemble de données général de parole d'aphasie et d'un ensemble de données correspondant de parole corrigée ;
la génération (116) d'une ou de plusieurs phrases formulées et contextuelles à l'aide du modèle génératif d'aphasie ; et
la fourniture en sortie (126) des une ou plusieurs phrases formulées et contextuelles.

2. Procédé selon la revendication 1, comprenant en outre le fait de déterminer si l'entrée audio contient de la parole comprenant des mots incorrects, des phrases incomplètes, des mots manquants, des pauses inhabituelles, et du bégaiement.

3. Procédé selon la revendication 2, comprenant en outre le fait d'inviter la personne à confirmer qu'elle est atteinte d'aphasie.

4. Procédé selon la revendication 3, comprenant en outre le chargement d'un profil de traduction d'aphasie spécifique de l'utilisateur sur l'assistant de traduction d'aphasie personnalisé après la confirmation par la personne du fait qu'elle est atteinte d'aphasie.

5. Procédé selon la revendication 4, comprenant en outre le fait d'inviter l'utilisateur à confirmer les une ou plusieurs phrases formulées et contextuelles.

6. Procédé selon la revendication 5, comprenant en outre :
la mise à jour du profil de traduction d'aphasie spécifique de l'utilisateur ; et
la conservation du modèle d'apprentissage automatique de traitement de langage naturel pour créer un modèle d'apprentissage automatique personnalisé.

7. Procédé selon la revendication 1, comprenant en outre la fourniture en entrée des une ou plusieurs phrases formulées et contextuelles à un modèle vocal acoustique entraîné.

8. Procédé selon la revendication 1, dans lequel le modèle de reconnaissance spécifique de l'aphasie a été adapté pour réduire une pluralité de pondérations associées à des aspects de parole ordinaire dans une langue donnée et pour augmenter des pondérations associées à des aspects de parole d'aphasie dans la langue donnée.

9. Procédé selon la revendication 1, dans lequel le modèle génératif d'aphasie est configuré pour traduire du texte de parole d'aphasie en texte ordinaire d'une langue donnée.

10. Procédé selon la revendication 9, dans lequel le modèle génératif d'aphasie est en outre configuré pour prédire du texte ordinaire supplémentaire de la langue donnée associé à la traduction de texte de parole d'aphasie.

11. Procédé d'entraînement d'un modèle d'assistant de communication d'aphasie personnalisé, le procédé comprenant :
la réception (202) d'un ensemble de données d'entraînement de paroles d'aphasie générale, dans lequel l'ensemble de données d'entraînement de parole d'aphasie générale comprend une pluralité de mots prononcés effectifs dans une langue donnée par des individus atteints d'aphasie et d'une pluralité de mots correspondants dans la langue donnée ;
la modification (204) de composantes textuelles dans l'ensemble de données d'entraînement pour supprimer des informations relatives à des communications et énoncés non verbaux ;
l'identification d'une pluralité de mots à partir d'une composante audio de l'ensemble de données d'entraînement ;
l'obtention (206) d'un modèle de reconnaissance de parole pré-entraîné, dans lequel le modèle de reconnaissance de parole pré-entraîné a été entraîné à l'aide de parole générale de la langue donnée ;
l'adaptation (208) du modèle de reconnaissance de parole pré-entraîné pour réduire une pluralité de pondérations prédictives sur la base d'un contexte de grammaire et de mots associé à la langue donnée ;
l'obtention (210) d'un modèle de parole génératif pré-entraîné applicable à la langue donnée ;
l'adaptation (212) du modèle de parole génératif pré-entraîné pour traduire du texte de parole d'aphasie en texte correspondant à de la parole voulue de la langue donnée ;
la réception (214) d'un échantillon audio, l'échantillon audio comprenant un audio de la propre parole d'aphasie d'un utilisateur ;
la génération (216) d'une pluralité de texte prédit, dans lequel le texte prédit correspond à de la parole voulue de l'échantillon audio à l'aide du modèle de parole génératif pré-entraîné adapté et du modèle de reconnaissance de parole pré-entraîné adapté ;
le fait d'inviter (220) un utilisateur à confirmer une exactitude de la pluralité de texte prédit ;
le réentraînement du modèle de parole génératif adapté et du modèle de reconnaissance de parole adapté sur la base de l'échantillon audio, de la pluralité de texte prédit, et d'une rétroaction reçue à partir de l'utilisateur ; et
le stockage (222) du modèle de parole génératif adapté réentraîné et du modèle de reconnaissance de parole adapté réentraîné sur un assistant de communication d'aphasie personnalisé sous la forme d'un profil d'utilisateur personnalisé pour l'utilisateur.

12. Procédé selon la revendication 11, dans lequel l'adaptation du modèle de parole génératif pré-entraîné comprend l'optimisation du modèle de reconnaissance de parole pré-entraîné sur des aspects de la parole d'aphasie.
